# EUROPÄISCHE PATENTANMELDUNG

(11) **EP 0 612 633 A1**
(43) Veröffentlichungstag der Anmeldung: **31.08.1994**
(21) Anmeldenummer: 94100841.9
(22) Anmeldetag: 21.01.1994
(51) Int. Cl.: B60G 17/056

(54) **Luftfederungsventil mit Feineinstellung, insbesondere für Nutzfahrzeuge**

(30) Priorität: 23.02.1993 DE 4305500
(71) Anmelder: KNORR-BREMSE SYSTEME FÜR NUTZFAHRZEUGE GmbH, 80809 München (DE)
(72) Erfinder: Pellecuer, Francois, D-80333 München (DE); Schnürch, Richard, D-81476 München (DE)

(57) **Zusammenfassung**

Bei einem Luftfederungsventil mit Feineinstellung, insbesondere für Nutzfahrzeuge, sind Mittel vorgesehen, welche das Fixieren des Betätigungshebels (27) des Luftfederungsventils in beiden Horizontallagen (Links- und Rechtsausführung) ermöglichen. Am Gehäuse (1) des Luftfederungsventils ist in Horizontallage eine feststehende Gabel (39) vorgesehen, welche mit Hilfe von Fixierungsmitteln (Stift) die Fixierung der einen Horizontallage des Betätigungshebels (27) ermöglicht, wobei in dieser Horizontallage die Nullage des Einlaß- und Auslaßventils im Inneren des Luftfederungsventils justierbar ist. An entgegengesetzter Position des Gehäuses ist eine in ihrer Relativlage zum Gehäuse einstellbare Gabel (41) vorgesehen, welche bei in Nullage befindlichem Einlaß- und Auslaßventil des Luftfederungsventils zur Einstellung der entgegengesetzten Horizontallage des Betätigungshebels und zur Fixierung desselben dient.

## Beschreibung

Die Erfindung betrifft ein Luftfederungsventil nach dem Gattungsbegriff des Patentanspruches 1.

Um die Einstellzeit von Luftfederungsventilen am Fahrzeug zu verkürzen, sind an sich bekannte Ventilkonstruktionen in der Regel am Gehäuse mit einer Gabel versehen, die mit Hilfe eines kalibrierten Stiftes eine Indexierung der Mitnehmerwelle in Abschlußstellung ermöglicht. Ist die Mitnehmerwelle des Luftfederungsventils entsprechend fixiert, kann das Luftfederungsventil am Fahrzeug befestigt werden, so daß die Gestängelänge zwischen Fahrzeugrahmen und Fahrzeugachse leicht einstellbar ist. Am Luftfederungsventil selbst wird die präzise Zuordnung zwischen Indexierung und Abschlußstellung eingestellt. Zu diesem Zweck wird zuerst die Mitnehmerwelle des Luftfederungsventils mit Hilfe des kalibrierten Stiftes und der Gabel festgehalten. Anschließend wird die Länge der im Inneren des Luftfederungsventils befindlichen Baugruppe aus Kolben- und Kolbenstift mit Hilfe eines Gewindestiftes verstellt, bis die Abschlußstellung des Einlaß- und Auslaßventils erreicht ist. Diese Einstellmethode wird seit langem mit Erfolg angewandt; sie hat jedoch folgenden Nachteil:
Wird die Ventileinstellung in der Lage "Betätigungshebel rechts" vorgenommen, das Luftfederungsventil jedoch in Stellung "Betätigungshebel links" am Fahrzeug eingebaut, geht aufgrund der Fertigungstoleranzen ein Großteil der Genauigkeit des Ventils verloren. Diesem Problem kann man auf verschiedene Weise begegnen: man versucht, das Ventil am Fahrzeug in "Hebellage links" und "Hebellage rechts" einzustellen. Dies geschieht nur zum Teil und ist außerdem teuer, weil zeitaufwendig. Auch ist es möglich, Geräte für Linkseinbau und für Rechtseinbau vorzusehen. Dies ist mit dem Nachteil einer aufwendigen Lagerhaltung sowie mit der Möglichkeit der Verwechslung verbunden.

Davon ausgehend besteht die Aufgabe der Erfindung darin, Luftfederungsventile der gattungsgemäßen Art so auszugestalten, daß die Feineinstellung für "Hebellage links" und "Hebellage rechts" ohne Zeitaufwand vorgenommen werden kann, derart, daß unabhängig von Links- oder Rechtslage die zuvor eingestellte Nullage des Einlaß- und Auslaßventils mit gleicher Genauigkeit besteht.

Zur Lösung dieser Aufgabe dienen die Merkmale nach dem Kennzeichnungsteil des Patentanspruches 1.

Die am Luftfederungsventil bzw. dessen seine Mitnehmerwelle aufnehmenden Gehäuseabschnitt angeordnete Gabelanordnung, bestehend aus einer feststehenden Gabel und einer einstellbaren Gabel, macht es möglich, die benötigte Feineinstellung verwechslungssicher vorzunehmen. Die durch die feststehende Gabel am Gehäuse des Luftfederungsventils festlegbare Horizontallage für den Betätigungshebel, welche entweder der Links- oder der Rechtsausführung entspricht, ermöglicht das nachfolgende Feineinstellen bzw. Justieren der die Nullage des Einlaß- und Auslaßventils bestimmenden Bauteile im Inneren des Ventilgehäuses bei Verschwenkung des Betätigungshebels um 180°, derart, daß der Betätigungshebel entsprechend dieser Nullage mit Hilfe der einstellbaren Gabel fixierbar ist, wobei bei im wesentlichen wieder horizontal er Position des Betätigungshebels dieser durch Einführen eines kalibrierten Stiftes in die Gabelöffnung der einstellbaren Gabel und einer entsprechende Bohrung an dem den Betätigungshebel tragenden Mitnehmer und durch nachfolgendes Festklemmen der einstellbaren Gabel fixierbar ist.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die beigefügte Zeichnung erläutert.
Figur 1 gibt schematisch den Aufbau eines Luftfederungsventils nach dem Stand der Technik wieder;
Figur 2 ist eine Schnittansicht durch ein Luftfederungsventil unter Darstellung des die Mitnehmerwelle aufnehmenden Gehäuseabschnitts und der zu beiden Seiten des Gehäuseabschnitts angeordneten Gabeln zum Fixieren des strichpunktiert angedeuteten Betätigungshebels in Links- oder Rechtsauslegung; und
Figur 3 ist eine Seitenansicht des Luftfederungsventils unter Darstellung der an einer Seite des Ventilgehäuses angeordneten, um eine Achse drehbaren und in justierter Lage fixierbaren Gabel.

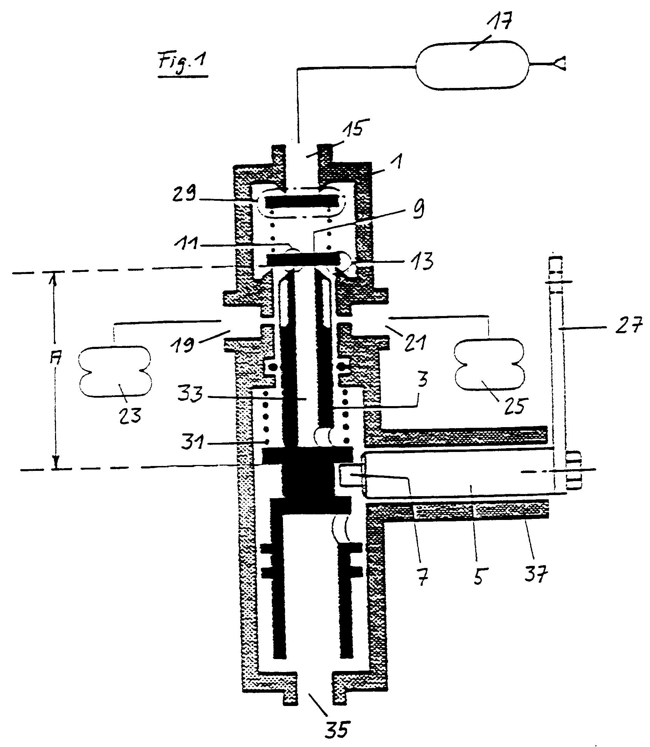

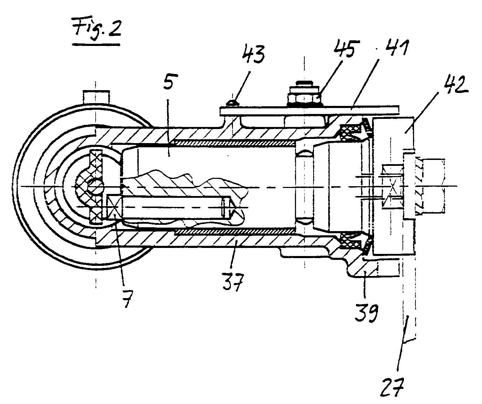

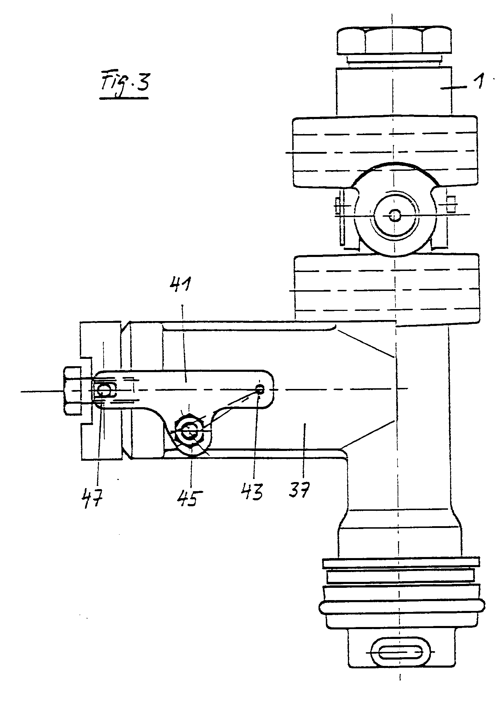

In Figur 1 der Zeichnung ist schematisch ein Luftfederungsventil nach dem Stand der Technik dargestellt, an welchem die erfindungsgemäße Einrichtung zur Feineinstellung zur Anwendung gelangt. Das Luftfederungsventil weist in einem Gehäuse 1 einen Kolben 3 auf, welcher durch einen an einer Mitnehmerwelle 5 befestigten Exzenter 7 in seiner Höhenlage verschiebbar ist. Der Kolben 3 wirkt gegenüber einem Ventilteller 9, wobei der Ventilteller mit dem Ende des Kolbens 3 einen Auslaß 11 und mit einem gehäuseseitigen Sitz einen Einlaß 13 bildet. An dem gemäß Darstellung am oberen Ende des Gehäuses befindlichen Ansschluß 15 ist ein Druckluftvorrat 17 angeschlossen. Weitere Anschlüsse 19 und 21 führen zu Luftfederbälgen 23 und 25. Das Luftfederungsventil ist am abgefederten Fahrzeugrahmen befestigt, wobei der in Ausgangsstellung waagrecht sich erstreckende Betätigungshebel 27 über ein Gestänge (nicht dargestellt) mit der Fahrzeugachse verbunden ist. Der Betätigungshebel wird infolgedessen bei allen durch Einfedern oder Ausfedern hervorgerufenen Höhenveränderungen des Fahrzeugrahmens aus seiner im wesentlichen horizontalen Mittellage ausgelenkt. Bei zunehmender Beladung senkt sich infolge des dann zu niedrigen Leerdrucks in den Luftfederbälgen der Fahrzeugrahmen mit dem daran befestigten Luftfederungsventil, derart, daß der Betätigungshebel nach oben schwenkt und über die Mitnehmerwelle und den Exzenter 7 den Kolben 3 gegen den Ventilteller 9 nach oben drückt. Hierdurch öffnet der Einlaß 13 und Druckluft aus dem Druckluftvorrat 17 strömt über das Rückschlagventil 29, den Einlaß 13 und die Anschlüsse 19 und 21 so lange in die Luftfederbälge 23 und 25, bis die ursprüngliche Niveauhöhe (waagrechte Position des Betätigungshebels 27) erreicht und der Einlaß 13 wieder geschlossen ist. Die insoweit unter Bezugnahme auf Fig.1 beschriebene Anordnung und Funktion entsprechen dem Stand der Technik. Die erfindungsgemäße Anordnung zur Feineinstellung, wie anhand von Fig.2 und Fig.3 erörtert, ist an derartigen Luftfederungsventilen anwendbar.

Bei abnehmender Belastung hebt sich infolge des nun zu hohen Druckes in den Luftfederbälgen der Fahrzeugrahmen; der Betätigungshebel als auch der Exzenter werden folglich nach unten bewegt. Der durch eine Feder 31 belastete Kolben 3 wandert ebenfalls nach unten und gibt den Auslaß 11 frei, so daß die Luft aus den Luftfederbälgen 23 und 25 über die Bohrung 33 im Kolben 3 und die Entlüftung 35 ins Freie entweicht, bis der Betätigungshebel 27 wieder seine ursprüngliche horizontale Stellung einnimmt und der Auslaß 11 geschlossen wird, d.h. bis wieder Abschlußstellung an Einlaß und Auslaß erreicht ist.

An dem die Mitnehmerwelle 5 aufnehmenden Gehäuseabschnitt 37 sind gemäß Figur 2 eine feststehende, vorzugsweise mit dem Gehäuseabschnitt materialeinheitlich verbundene Gabel 39 und an entgegengesetzter Position, d.h. im wesentlichen in waagrechter Lage, eine einstellbare Gabel 41 vorgesehen. Die in horizontaler Lage des Gehäusesabschnitts 37 vorgesehene feste Gabel entspricht derjenigen an sich bekannter Konstruktionen und dient dazu, die horizontale Lage des Betätigungshebels 27 festzulegen, wobei ein kalibrierter Stift (nicht dargestellt) durch die Gabelöffnung in eine in horizontal er Lage des Betätigungshebels zugeordnete Öffnung (nicht dargestellt) an dem den Betätigungshebel tragenden Mitnehmer 42 einführbar ist. Nach Einführen des Stiftes wird auf diese Weise der Betätigungshebel drehfest von der Gabel 39 gehaltert. Bei in horizontal er Lage fixiertem Betätigungshebel wird anschließend die relative Lage des Kolbens 3 innerhalb des Gehäuses durch nicht dargestellte Mittel festgelegt, z.B. mittels eines die Lage des Kolbens 3 festlegenden und verschraubbaren Stifts, derart, daß bei der in Figur 1 schematisch wiedergegebenen Anordnung das Maß "A" für die Nullage des Einlaß- und Auslaßventils (Auslaß 11, Einlaß 13) festlegbar ist.

Um das Luftfederungsventil auch für die entgegengesetzte Bauseite des Nutzfahrzeugs einsetzen zu können, um also das Ventil in Linksausführung als auch in Rechtsausführung am Fahrzeug zu verwenden, wird anschließend nach Lösen des kalibrierten (nicht dargestellten) Stifts an der feststehenden Gabel die Mitnehmerwelle durch Drehen des Betätigungshebels um 180° geschwenkt und in der vorgenannten Abschlußstellung des Einlaß- und Auslaßventils (Auslaß 11, Einlaß 13) festgehalten. Hier befindet sich der Betätigungshebel sehr nahe an seiner Idealstellung, da die Längstoleranzen des Kolbens 3 unmittelbar zuvor ausgeglichen wurden (Maß A). Nunmehr kommt die einstellbare Gabel 41 zur Anwendung. Die Gabel 41 ist einstellbar, d.h. sie ist um eine am Gehäuseabschnitt 37 vorgesehene Achse 43 in Form eines Lagerstifts oder dergleichen schwenkbar und kann in vorbestimmter Lage mittels geeigneter Klemmittel fixiert werden, z.B. mittels einer Mutter 45, welche gegenüber der Gabel 41 verspannbar ist. Befindet sich der Betätigungshebel in der um 180° verschwenkten Lage, in welcher die Abschlußstellung des Einlaß- und Auslaßventils besteht, dann wird ein kalibrierter Stift 47 durch die Gabelöffnung der einstellbaren Gabel 41 und die zugeordnete Bohrung des Mitnehmers 42 gesteckt, wodurch die Gabel 41 präzise positionierbar ist. Anschließend wird die Gabel 41 in ihrer der Nullage des Einlaß- und Auslaßventils entsprechenden Drehposition mit Hilfe der Mutter 45 festgeschraubt, d.h. am Gehäuseabschnitt fixiert. Ausgehend von dieser Position kann nunmehr die Einstellung am Gestänge für das Luftferderungsventil vorgenommen werden.

### Bezugszeichenliste

- 1: Gehäuse
- 3: Kolben
- 5: Mitnehmerwelle
- 7: Exzenter
- 9: Ventilteller
- 11: Auslaß
- 13: Einlaß
- 15: Anschluß
- 17: Druckluftvorrat
- 19: Anschluß
- 21: Anschluß
- 23: Luftfederbalg
- 25: Luftfederbalg
- 27: Betätigungshebel
- 29: Rückschlagventil
- 31: Feder
- 33: Bohrung
- 35: Entlüftung
- 37: Gehäuseabschnitt
- 39: feststehende Gabel
- 41: einstellbare Gabel
- 42: Mitnehmer
- 43: Achse
- 45: Mutter
- 47: Stift

## Patentansprüche

1. Luftfederungsventil mit Feineinstellung, insbesondere für Nutzfahrzeuge, mit einem in einem Gehäuse verlagerbaren, auf ein an Luftfederbälge angeschlossenes Einlaß- und Auslaßventil einwirkenden Kolben, welcher durch einen mittels einer drehbaren Mitnehmerwelle verlagerbaren Exzenter betätigbar ist, wobei die Mitnehmerwelle außerhalb des Gehäuses mit einem Betätigungshebel verbunden ist, dessen Ende über einen Verbindungsmechanismus mit der Fahrzeugachse in Verbindung steht und die Nullage bei geschlossenem Einlaß- und Auslaßventil in im wesentlichen horizontal er Position des Betätigungshebels vorliegt, dadurch gekennzeichnet, daß an dem die Mitnehmerwelle (5) aufnehmenden Gehäuseabschnitt (37) an waagrechter Position desselben eine feststehende Gabel (39) zur Fixierung der Mitnehmerwelle (5) in einer der beiden horizontalen Positionen vorgesehen ist, und daß in einer um 180° versetzten Lage am Gehäuseabschnitt (37) eine in ihrer Position bezüglich des Gehäuseabschnitts verlagerbare und nach Einstellung fixierbare Gabel (41) zur Festlegung der zweiten Horizontallage des Betätigungshebels vorgesehen ist.

2. Luftfederungsventil nach Anspruch 1, dadurch gekennzeichnet, daß sowohl die festehende Gabel (39) auch als auch die einstellbare Gabel (41) Mittel (Stift) zur Fixierung des Betätigshebels (7) in beiden Horizontal lagen aufweisen.

3. Luftfederungsventil nach Anspruch 1 oder 2, dadurch gekennzeichnet, daß die einstellbare Gabel (41) als ein um eine Achse (43) schwenkbarer Gabelkörper ausgebildet ist.

4. Luftfederungsventil nach Anspruch 3, dadurch gekennzeichnet, daß die einstellbare Gabel (41) Mittel (Mutter 45) zur Fixierung am Gehäuseabschnitt aufweist.

5. Luftfederungsventil nach Anspruch 4, dadurch gekennzeichnet, daß die einstellbare Gabel (41) an ihrem dem Betätigungshebel zugewandten Ende mit einer Gabelöffnung versehen ist, derart, daß der Betätigungshebel durch Einführen eines Stifts in die Gabelöffnung und einen den Betätigungshebel tragenden Mitnehmer (42) in seiner Drehposition fixierbar ist.
